# EUROPEAN PATENT APPLICATION

(11) **EP 2 490 502 A1**
(43) Date of publication of application: **22.08.2012**
(21) Application number: 11154513.3
(22) Date of filing: 15.02.2011
(51) Int. Cl.: H04W 84/20, H04L 29/06

(54) **Master mobile wireless communications device to send media content to slave mobile wireless communications device and associated methods**

(71) Applicant: Research In Motion Limited, Waterloo, ON N2L 3W8 (CA)
(72) Inventor: Hill, Thomas Casey, Rolling Meadows, IL 60008 (US)
(74) Representative: Fennell, Gareth Charles

(57) **Abstract**

A communications system includes a plurality of slave mobile wireless communications devices each having a first near field communications (NFC) device. The communications system also includes a master mobile wireless communications device having second NFC device, and a processor coupled to the second NFC device. The processor is configured to associate different content items with different respective slave mobile wireless communications devices, based upon NFC communication with the plurality of slave mobile wireless communications devices, and to send the different content items to the different respective slave mobile wireless communications devices.

## Description

### Technical Field

The present disclosure relates to the field of mobile wireless communications devices, and, more particularly, to mobile wireless communications devices for communicating with payment processing systems.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

### Brief Description of the Drawings

FIG. 1 is a schematic block diagram of a communications system in accordance with an example embodiment.

FIG. 2 is a schematic block diagram of a communications in accordance with an alternative example embodiment.

FIG. 3 is a schematic block diagram of a communications system in accordance with an additional example embodiment.

FIG. 4 is a schematic block diagram of a communications system in accordance with a further example embodiment.

FIG. 5 is a schematic block diagram of a communications system in accordance with yet another example embodiment.

FIG. 6 is a flowchart of method of operating a master mobile wireless communications device in accordance with an example embodiment.

FIG. 7 is a schematic block diagram illustrating example components of a mobile wireless communications device that may be used with the communications systems of FIGS. 1-5.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a communications system may include a plurality of slave mobile wireless communications devices each having a first near field communications (NFC) device. The communications system may also include a master mobile wireless communications device comprising a second NFC device, and a processor coupled to the second NFC device. The processor may be configured to associate different content items with different respective slave mobile wireless communications devices, based upon NFC communication with the plurality of slave mobile wireless communications devices, and send the different content items to the different respective slave mobile wireless communications devices. This advantageously allows quick and easy distribution of content items to the proper slave mobile wireless communications devices.

In some applications, the plurality of slave mobile wireless communications devices may have different media playback features, and the processor may be configured to associate the different content items with the different respective slave mobile wireless communications devices based upon the different media playback features. The different media playback features may comprise at least one of video playback capability, audio playback capability, text display capability, multimedia platform display capability, or playback quality.

The content items may comprise different media types, the processor may associate the different content items with the different respective slave mobile wireless communications device based upon matching media playback features with the media types. The different media types may comprise at least one of video, audio, or text.

In addition, the different content items may comprise different portions of a processing task. The plurality of slave mobile wireless communications devices may have different media playback features, and the processor may be configured to split the different portions of the content items to different respective slave mobile wireless communications devices based upon the different media playback features.

Different content items may have different content categories, and the processor may be configured to associate the different content items with the different respective slave mobile wireless communications devices based upon the different content categories.

Further, the master mobile wireless communications device may also include an input device, and the processor may be configured to cooperate with the input device to generate a priority list, and associate the different content items with the different respective slave mobile wireless communications devices based upon the priority list.

A given slave mobile wireless communications device may have a touch sensitive screen. The master mobile wireless communications device may be configured to associate a given content item with the given slave mobile wireless communications device based upon the touch sensitive display thereof. In addition, the processor may be configured to send a presentation time for a given content item to at least one slave mobile wireless communications device. ,

A method aspect is directed to a method of operating communications system comprising a plurality of slave mobile wireless communications devices each having a first near field communications (NFC) device, and a master mobile wireless communications device. The method may include associating different content items with different respective slave mobile wireless communications devices, based upon NFC communication with the plurality of slave mobile wireless communications devices, using a processor of the mobile wireless communications device in cooperation with a second NFC device thereof. The method may also include sending the different content items to the different respective slave mobile wireless communications devices, using the processor.

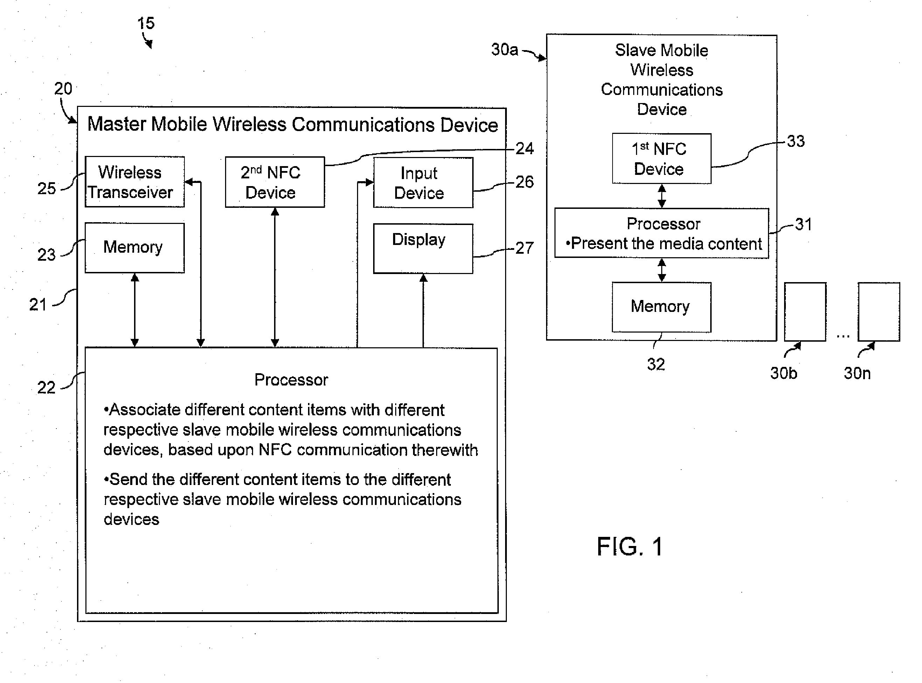

Referring initially to FIG. 1, a communications system **15** is now described. The communications system **15** includes a master mobile wireless communications device **20** and a plurality of slave mobile wireless communications devices **30a-30n.** The master mobile wireless communications device 20 and the slave mobile wireless communications devices **30a-30n** may be portable or personal media players (e.g., music or MP3 players, video players, etc.), remote controls (e.g., television or stereo remotes, etc.), portable gaming devices, portable or mobile telephones, smartphones, tablet computers, etc. It should be appreciated that the master mobile wireless communications device **20** and the slave mobile wireless communications devices **30a-30n** may be different devices as described above, or may each be a same device. For example, the master mobile wireless communications device **20** may be a smartphone, and the slave mobile wireless communications devices **30a-30n** may be tablet computers, in some applications.

The master mobile wireless communications device **20** includes a processor **22** coupled to a memory **23.** The memory **23** may include volatile and non-volatile portions, and may be configured to store content items, such as audio and video files.

Also coupled to the processor **22** are an input device **26,** a display **27,** a wireless transceiver **25,** and a second NFC device **24.** A housing **21** carries the processor **22,** memory **23,** input device **26,** display **27,** wireless transceiver **25,** and second NFC device **24.** The input device **26** may be a keyboard, touch sensitive pad, trackball, thumbwheel, button, or other suitable device, for example. It should be appreciated that in some applications, the display **27** may be a touch sensitive display, and may therefore serve as an input device. In addition, the wireless transceiver **25** may be a cellular transceiver, and may be configured to perform both voice and data cellular communications. Other wireless formats may also be used, such as WiFi, WiMAX, etc.

The slave mobile wireless communications device **30a** includes a processor **31** coupled to a memory **32** and a first NFC device **33.** The other slave mobile wireless communications devices **30b...30a** may include similar features as the slave mobile wireless communications device **30a.**

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The processor **22** of the master mobile wireless communications device **20** is configured to associate different content items with different respective slave mobile wireless communications devices **30a-30n,** based upon NFC communication therewith. Next, the processor **22** sends the different content items to the different respective slave mobile wireless communications devices **30a-30n** via the first NFC device **33** and second NFC device **24.** The processor **31** of a given slave mobile wireless communications device **30a** may then present the media content. The communications system **10** therefore advantageously allows the quick and easy routing of content from the master mobile wireless communications device **20** to an appropriate slave wireless communications device **30a.**

In some applications, the processor **22** may associate the different content items with different slave mobile wireless communications devices **30a-30n** based upon the content itself. For example, the memory 23 may store a preference list associating certain content with certain slave mobile wireless communications devices **30a-30n,** and the processor **22** may make the associations based upon that preference list. The preference list may be based upon a type of the content (e.g. audio content, video content, etc), a genre of the content (e.g. classical music, opera music, comedy video, etc), or something else related to the content. This preference list may be input via the input device **26** or may be received via a wireless communication.

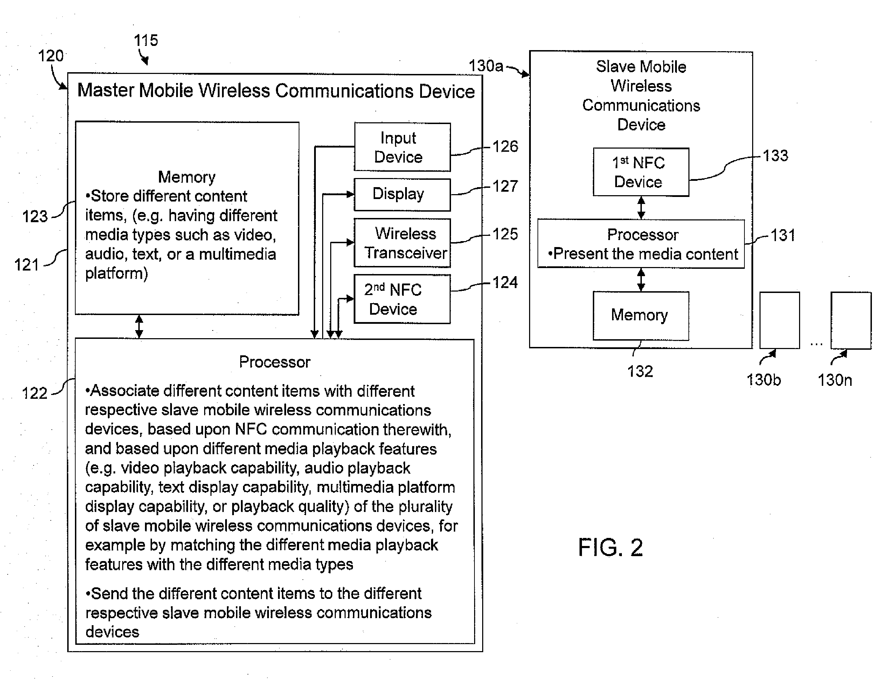

In other applications, the associations may be determined based upon matching different media playback features of the slave mobile wireless communications devices **30a-30n** to different media types. Such an embodiment is now described with reference to the communications system **115** of FIG. 2.

The communications system **115** includes a master mobile wireless communications device **120** and a plurality of slave mobile wireless communications devices **130a-130n.** The master mobile wireless communications device **120** includes a housing **121,** a processor **122** carried by the housing and coupled to a memory **123** also carried by the housing, a second NFC device **124** carried by the housing, a wireless transceiver **125** carried by the housing, an input device **126** carried by the housing, and a display **127** carried by the housing. The second NFC device **124,** wireless transceiver **125,** input device **126,** and display **127** are similar to the second NFC device **24,** wireless transceiver **25,** input device **26,** and display **27** of the communications system **15** described above with reference to FIG. 1. Therefore, these components require no further discussion herein.

The plurality of slave mobile wireless communications devices **130a-130n** may each have different media playback features. Example media playback features include video playback capability, audio playback capability, and text display capability. It should be understood that this may encompass and multimedia platform (e.g., Flash, HTML5) display capability. Video playback capability may include the capability to play a variety of video file formats (e.g., AVI, MPEG, WMV, etc.), and audio playback capability may similarly include the capability to play a variety of audio file formats (e.g., WAV, MP3, FLAC, etc). It should be understood that video playback capability can also refer to whether a particular slave mobile wireless communications device of the plurality thereof **130a-130n** has a display screen, and that audio playback capability can similarly refer to whether a particular slave mobile wireless communications device has a speaker or an audio output connection.

Text display capabilities may include the capability to display textual content stored in a variety of file formats, such as PDF files and TXT files. In addition, text display capabilities may refer to whether a particular slave mobile wireless communications device of the plurality thereof **130a-130n** has a display screen, or what type of display screen the particular slave mobile wireless communications device has (e.g. E Ink, LCD, etc). Multimedia platform display capabilities may include the capability to display files displayable using a variety of multimedia platforms, such as FLASH or HTML5.

In this example embodiment, the memory **123** stores content having different media types, such as video media, audio media, textual media, or media displayable using a multimedia platform. It should be understood that a given item of content may include a plurality of different media types. For example, an item of content may include both video and audio media.

The processor **122** is configured to associate different content items with different slave mobile wireless communications devices **130a-130n** based upon NFC communication therewith, and based upon different media playback features thereof. This association may be done by matching the different media playback features with different media types, for example. The processor **122** sends the different content items to the slave mobile wireless communications devices **130a-130n** via the first NFC device **133** and second NFC device **124.** The processor **122** may determine the media playback features of the slave mobile wireless communications devices **130a...130n** by querying them for their media playback features, or by querying them for their model type or number, for example.

This communications system **115** therefore allows relatively quick and easy transfer of media content from the master mobile wireless communications device **120** to an appropriate slave mobile wireless communications device **130a**. Thus, a media content item having video content would be appropriately sent to a slave mobile wireless communications device of the plurality thereof **130a-130n** able to display that video content, or a media content item having audio content would be sent to a slave mobile wireless communications device able to play that audio content.

In some applications, the playback quality offered by a given slave mobile wireless communications device of the plurality thereof **130a-130n** may be considered to be a media playback feature, and content items may be associated with the slave mobile wireless communications devices **130a-130n** based upon the playback quality. For example, all the slave mobile wireless communications devices **130a-130n** may be capable of playing a media content item having audio content, but the slave mobile wireless communications device **130a** may be able to play audio content at a higher quality than the other slave mobile wireless communications devices **130b...130n.** The processor 122 would therefore associate a content item having audio with the slave mobile wireless communications device **130a.** This advantageously allows the slave mobile wireless communications device of the plurality thereof **130a-130n** able to present the media content at a highest quality to quickly and easily receive the media content from the master mobile wireless communications device **120a.**

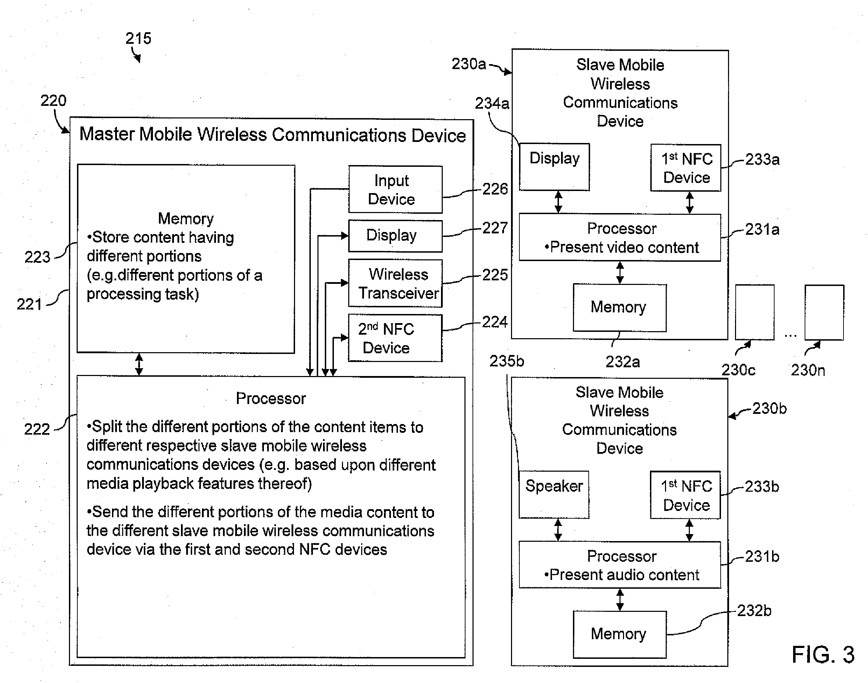

As explained above, in some cases, a given content item may include two or more media types, or portions of a processing task. Therefore, in some applications, it may be desirable to split the media types or portions of a processing task of a content item among a plurality of slave mobile wireless communications devices **230a-230n.** This functionality is now described in detail with reference to the communications system **215** shown in FIG. 3.

The communications system **215** includes a master mobile wireless communications device **220** and a plurality of slave mobile wireless communications devices **230a-230n.** The master mobile wireless communications device **220** includes a housing **221** carrying a processor **222** coupled to a memory **223** also carried by the housing, a second NFC device **224** carried by the housing, a wireless transceiver **225** carried by the housing, an input device **226** carried by the housing, and a display **227** carried by the housing. The second NFC device **224,** wireless transceiver **225,** input device **226,** and display **227** are similar to the second NFC device **24,** wireless transceiver **25,** input device **26,** and display **27** of the communications system **15** described above with reference to FIG. 1. Therefore, these components require no further discussion herein.

In this example embodiment, the slave mobile wireless communications devices **230a-230n** have different media playback features. For example, the slave mobile wireless communications device **230a** includes a processor **231a** coupled to a first NFC device **233a,** a memory **232a,** and a display **234a,** and has video playback capability. The slave mobile wireless communications device **230b** includes a processor **231b** coupled to a first NFC device **233b,** a memory **232b,** and a speaker **235b,** and has audio playback capability.

The processor **222** of the master mobile wireless communications device **220** is configured to split the different portions of content items to different slave mobile wireless communications devices **230a-230n,** for example based upon different media playback features thereof. The processor **222** then sends the different portions of the content to the different slave mobile wireless communications devices **230a-230n** using the first NFC devices **233a...233n** and the second NFC device **224.**

By way of example, the processor **222** can split audio content and video content from a given content item, send the video content to the slave mobile wireless communications device **230a** since that device has video playback capability, and send the audio content to the slave mobile wireless communications device **230b** since that device has audio playback capability. It should be understood that the video and audio content may originally be stored together as a given content item, such as an AVI file, and that the processor **222** may split the video content and audio content from that content item, using techniques known to those of skill in the art.

It should be understood that the processor **222** may also split the content between the different slave mobile wireless communications devices **230a-230n** based upon playback quality. For example, both the slave mobile wireless communications devices **230a, 230b** may be capable of audio and video playback, but the slave mobile wireless communications device **230a** may be capable of video playback at a higher quality than the slave mobile wireless communications device **230b,** while the slave mobile wireless communications device **230b** is capable of audio playback at a higher quality than the slave mobile wireless communications device **230a.** Therefore, the processor **222** may split the video content of the content item to the slave mobile wireless communications device **230a,** and the audio content to the slave mobile wireless communications device **230b.**

This communications system **215** therefore enables the slave mobile wireless communications devices **230a-230n** to cooperate to present the different portions of the media content at a highest possible quality. When the different portions of a processing task are sent to different slave mobile wireless communications devices **230a-230n,** the slave mobile wireless communications devices **230a-230n** may then each execute their respective portion of the processing task, thereby creating a parallel processing system.

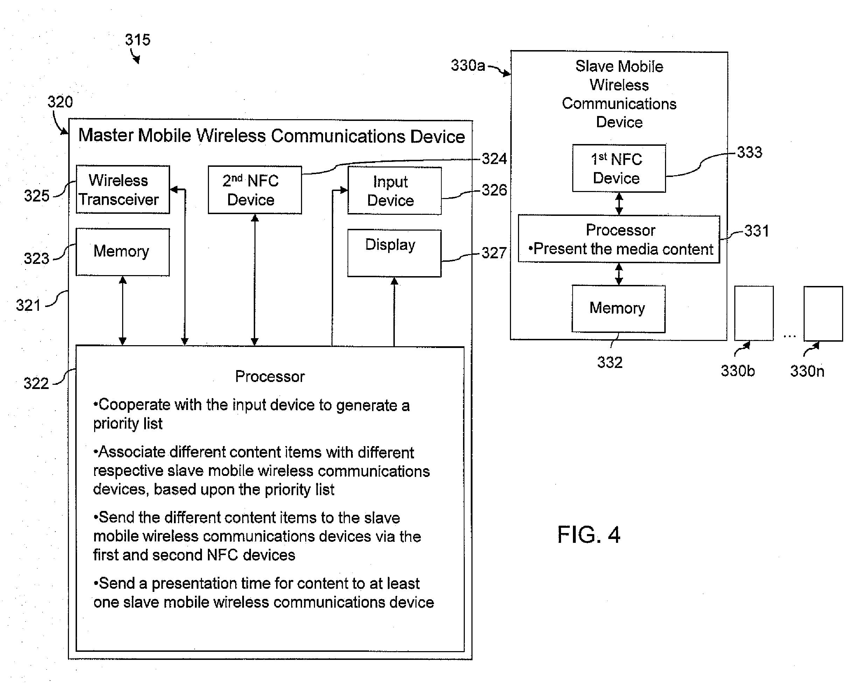

In other applications, it may be desirable for the processor **222** to associate different content items with different slave mobile wireless communications devices **330a** based on a priority list. Such an example embodiment is now described in detail with reference to the communications system **320 shown** in FIG. 4.

The communications system **315** includes a master mobile wireless communications device **320** and a plurality of slave mobile wireless communications devices **330a-330n.** The master mobile wireless communications device **320** includes a processor **322** carried by a housing **321** and coupled to a memory **323** also carried by the housing, a second NFC device **324** carried by the housing, a wireless transceiver **325** carried by the housing, an input device **326** carried by the housing, and a display **327** carried by the housing. The second NFC device **324,** wireless transceiver **325,** input device **326,** and display **327** are similar to the second NFC device **24,** wireless transceiver **25,** input device **26,** and display **27** of the communications system **15** described above with reference to FIG. 1. Therefore, these components require no further discussion herein.

In this example embodiment, the processor **322** of the master mobile wireless communications device **320** is configured to cooperate with the input device **326** to generate a priority list. By cooperating with the input device **326,** it is meant that the processor **322** can either directly accept input of a priority list via the input device **326** in a configuration mode, or may generate the priority list based upon input received via the input device **326** over a period of time in a regular operation mode. It should also be understood that an entire priority list may be uploaded to the mobile wireless communications device **330a...330n** at once, or that a priority of the items may be selected individually.

The priority list specifies which slave mobile wireless communications devices **330a-330n** receive which content items. For example, the priority list may specify that one slave mobile wireless communications device **330a** is to receive audio content items, while another slave mobile wireless communications device **330b** is to receive video content items. As another example, the priority list may specify that one slave mobile wireless communications device **330a** is to receive audio or video content items relating to a first genre (e.g., opera music) while another slave mobile wireless communications device **330b** is to receive audio or video content items relating to a second genre (e.g., classical music.)

The processor **320** associates different content items with different respective slave mobile wireless communications devices **330a-330n** based upon the priority list. The processor **320** then sends the content items to the slave mobile wireless communications devices **330a-330n** via the first NFC device **333** and second NFC device **324.**

This communications system **315** therefore allows the master mobile wireless communications device **320** to pre-establish a priority list based upon the input device **326** and to then quickly and easily route media content to the slave mobile wireless communications devices **330a...330n** based upon the priority list. This saves time, as no input is used to determine where the media content should be sent after the initial establishment of the priority list. In addition, the processor **322** may send a presentation time for content to at least one slave mobile wireless communications device.

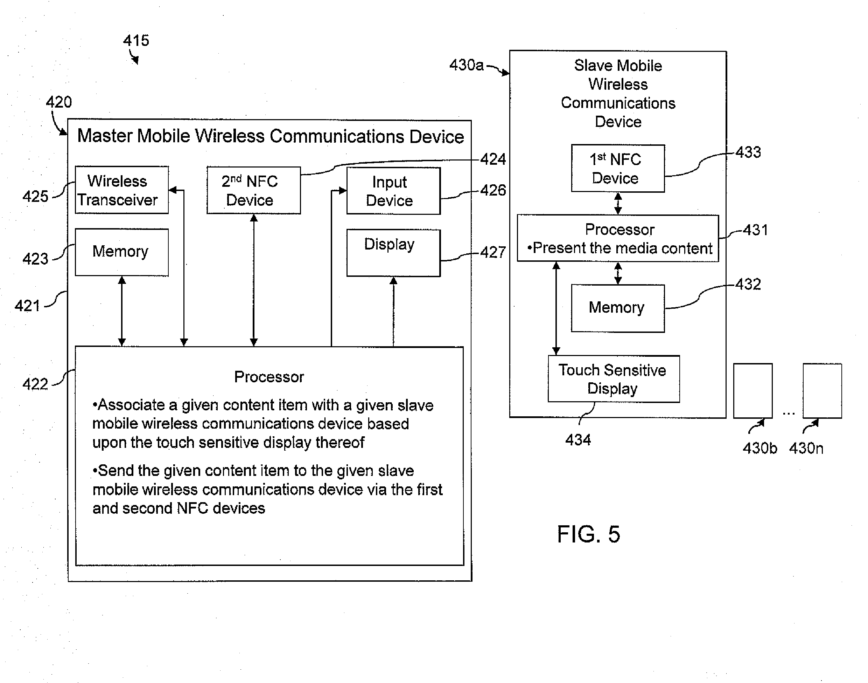

In some example embodiments, it may be desirable for the slave mobile wireless communications device **330a** to be manually associated via an input device thereof. Such an example embodiment is now described with reference to the communications system **415** of FIG. 5.

The communications system **415** includes a master mobile wireless communications device **420** and a plurality of slave mobile wireless communications devices **430a-430n.** The master mobile wireless communications device **420** includes a processor **422** carried by a housing **421** coupled to a memory **423** also carried by the housing, a second NFC device **424** carried by the housing, a wireless transceiver **425** carried by the housing, an input device **426** carried by the housing, and a display **427** carried by the housing. The second NFC device **424,** wireless transceiver **425,** input device **426,** and display **427** are similar to the second NFC device **24,** wireless transceiver **25,** input device **26,** and display **27** of the communications system **15** described above with reference to FIG. 1. Therefore, these components require no further discussion herein.

In this example embodiment, the slave mobile wireless communications device **430a** includes a processor **431** coupled to a first NFC device **433,** a memory **432,** and a touch sensitive display **434a.** The processor **422** of the master mobile wireless communications device **420** is configured to associate a given content item with a given slave mobile wireless communications device **430a** based upon the touch sensitive display **434** thereof. This may be accomplished by the processor **431** of the slave mobile wireless communications device **430a,** when in NFC communications range with the master mobile wireless communications device **420,** sending a signal to the master mobile wireless communications device indicating that the touch sensitive display **434** has been touched.

The processor **422** then sends the content item to the slave mobile wireless communications device **430a** via the first NFC device **433** and the second NFC device **424.** This advantageously allows quick and easy selection of the slave mobile wireless communications device **430a** based upon physical touch.

In some applications, the display **427** of the master mobile wireless communications device **420** may also be touch sensitive. Content may be presented on the display **427,** and then "dragged" off that display and "onto" the touch sensitive display **434** of the slave mobile wireless communications device **430a.** This operation may be performed both during actual presentation of the media content, or in a listing of the content items. If performed on a listing of the content items, an icon, symbol, or word representing a media content item may be selected on the display **427,** then dragged off that display and onto the touch sensitive display **434** of the slave mobile wireless communications device **430a.**

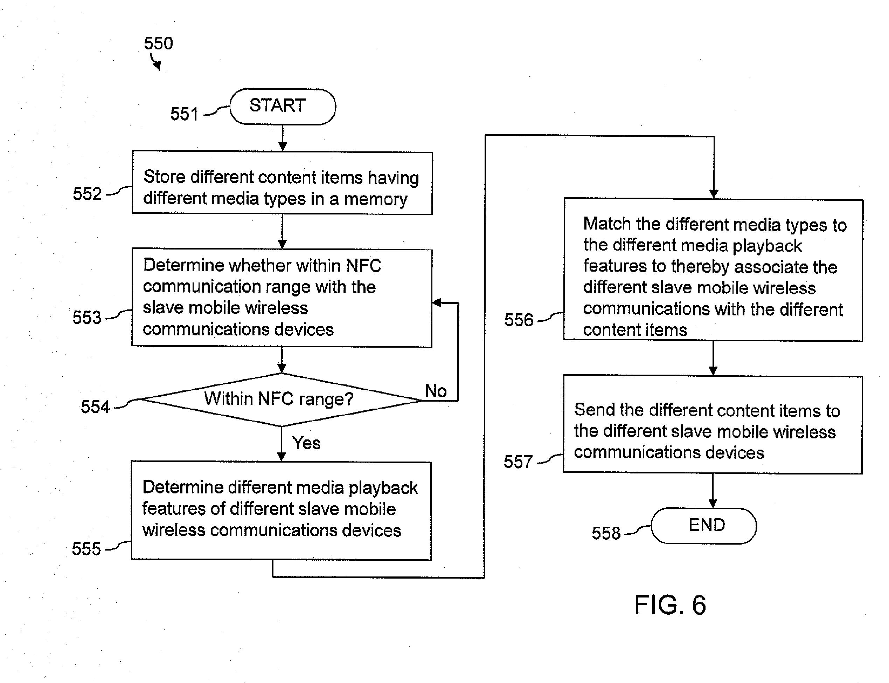

A method of operating a master mobile wireless communications device **20** is now described with reference to the flowchart **550** of FIG. 6. After the start (Block **551),** different content items having different media types are stored in a memory **23** (Block **552).** Next, it is determined whether the master mobile wireless communications device **20** is within NFC communication range with the slave mobile wireless communications devices **30a-30n** (Block **553).** At Block **554,** if the master mobile wireless communications device **20** is not within NFC communication range with the slave mobile wireless communications devices **30a-30n,** then the master mobile wireless communications device returns to determining whether the master mobile wireless communications device is within NFC communication range with the slave mobile wireless communications devices at Block **553.**

On the other hand, if at Block **554** the master mobile wireless communications device **20** is within NFC communication range with the slave mobile wireless communications devices **30a-30n,** then the master mobile wireless communications device **20** determines different media playback features of different slave mobile wireless communications devices, at Block **555.** The master mobile wireless communications device **20** then matches the different media types to the different media playback features to thereby determine at least one selected slave mobile wireless communications device to receive the media content **30a** (Block **556).** The media content is then sent to the at least one selected mobile wireless communications device **30a** (Block **557).** Block **558** indicates the end of the method.

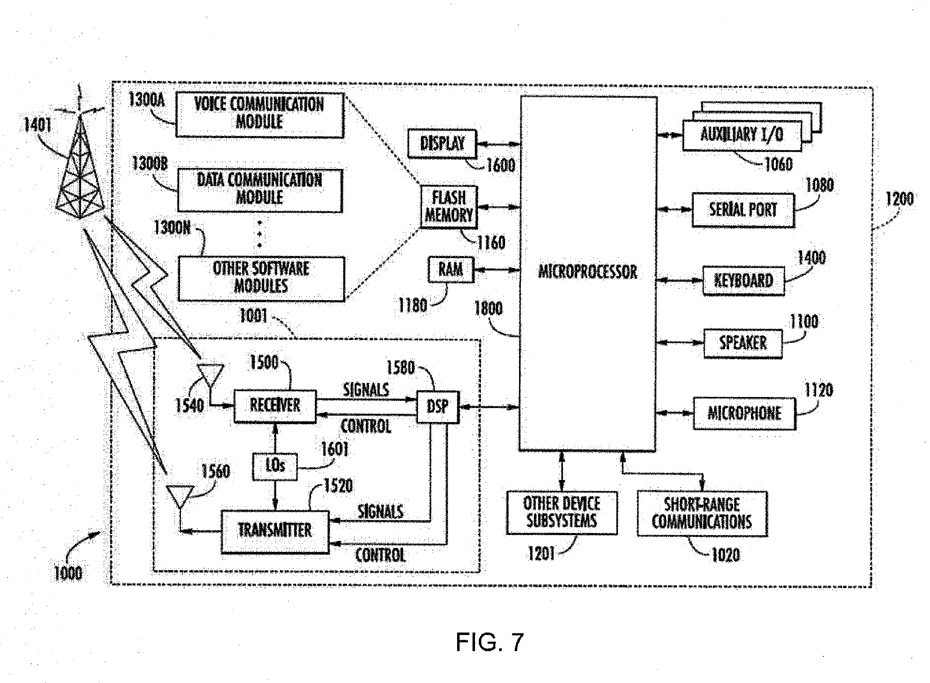

Example components of a mobile wireless communications device **1000** that may be used in accordance with the above-described embodiments are further described below with reference to FIG. 7. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 7. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540 and 1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520. For** example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

## Claims

1. A communications system comprising:
a plurality of slave mobile wireless communications devices each having a first near field communications (NFC) device;
a master mobile wireless communications device comprising
a second NFC device, and
a processor coupled to said second NFC device and configured to
associate different content items with different respective slave mobile wireless communications devices, based upon NFC communication with said plurality of slave mobile wireless communications devices, and
send the different content items to the different respective slave mobile wireless communications devices.

2. The communications system of Claim 1, wherein said plurality of slave mobile wireless communications devices have different media playback features; and wherein said processor is configured to associate the different content items with the different respective slave mobile wireless communications devices based upon the different media playback features.

3. The communications system of Claim 2 wherein the different media playback features comprise at least one of video playback capability, audio playback capability, text display capability, or playback quality.

4. The communications system of Claim 2, wherein the content items comprise different media types; and wherein said processor associates the different content items with the different respective slave mobile wireless communications device based upon matching media playback features with the media types.

5. The communications system of Claim 4, wherein the different media types comprise at least one of video, audio, or text.

6. The communications system of Claim 1, wherein the different content items comprise different portions of a processing task.

7. The communications system of Claim 1, wherein said plurality of slave mobile wireless communications devices have different media playback features; and wherein said processor is configured to split the different portions of the content items to different respective slave mobile wireless communications devices based upon the different media playback features.

8. The communications system of Claim 1, wherein different content items have different content categories; and wherein said processor is configured to associate the different content items with the different respective slave mobile wireless communications devices based upon the different content categories.

9. The communications system of Claim 1, wherein said master mobile wireless communications device further comprises an input device; and wherein said processor is configured to cooperate with said input device to generate a priority list, and associate the different content items with the different respective slave mobile wireless communications devices based upon the priority list.

10. The communications system of Claim 1, wherein a given slave mobile wireless communications device comprises a touch sensitive screen; and wherein said master mobile wireless communications device is configured to associate a given content item with the given slave mobile wireless communications device based upon the touch sensitive display thereof.

11. The communications system of Claim 1, wherein said processor is configured to send a presentation time for a given content item to at least one slave mobile wireless communications device.

12. A master mobile wireless communications device for communication with a plurality of slave mobile wireless communications devices each having a first near field communications (NFC) device, the master mobile wireless communications device comprising:
a second NFC device;
a processor coupled to said second NFC device and configured to
associate different content items with different respective slave mobile wireless communications devices, based upon NFC communication with said plurality of slave mobile wireless communications devices, and
send the different content items to the different respective slave mobile wireless communications devices.

13. The master mobile wireless communications device of Claim 12, wherein said processor is configured to associate the different content items with the different respective slave mobile wireless communications devices based upon different media playback features thereof.

14. A method of operating communications system comprising a plurality of slave mobile wireless communications devices each having a first near field communications (NFC) device, and a master mobile wireless communications device, the method comprising:
associating different content items with different respective slave mobile wireless communications devices, based upon NFC communication with the plurality of slave mobile wireless communications devices, using a processor of the mobile wireless communications device in cooperation with a second NFC device thereof; and
sending the different content items to the different respective slave mobile wireless communications devices, using the processor.

15. The method of Claim 14, wherein the plurality of slave mobile wireless communications devices have different media playback features; and wherein the different content items are associated with the different respective slave mobile wireless communications devices based upon the different media playback features.
